# FASCICULE DE BREVET EUROPEEN

(11) **EP 2 419 721 B1**
(45) Date de publication et mention de la délivrance du brevet: **10.04.2019**
(21) Numéro de dépôt: 10713935.4
(22) Date de dépôt: 14.04.2010
(51) Int. Cl.: G01N 27/49

(54) **CAPTEUR ELECTROCHIMIQUE AMPEROMETRIQUE ET SON PROCEDE DE FABRICATION**
ELEKTROCHEMISCHER AMPEROMETRISCHER SENSOR UND DESSEN HERSTELLUNGSVERFAHREN
AMPEROMETRIC ELECTROCHEMICAL SENSOR AND METHOD OF MANUFACTURING

(30) Priorité: 15.04.2009 EP 09157979
(43) Date de publication de la demande: 22.02.2012
(73) Titulaire: Neroxis SA, 2000 Neuchâtel (CH)
(72) Inventeur: DE COULON, Yves, CH-2075 Thielle-Wavre (CH); BERIET, Carine, CH-2034 Peseux (CH); NIEDERMANN, Philippe, CH-2034 Peseux (CH)
(74) Mandataire: P&TS SA (AG, Ltd.)
(86) Numéro de dépôt international: PCT/EP2010/054854
(87) Numéro de publication internationale: WO 2010/119045

(56) Documents cités:
- EP-A- 0 586 982
- UL HAQUE ET AL: "A MEMS fabricated cell electrophysiology biochip for in silico calcium measurements" SENSORS AND ACTUATORS B, ELSEVIER SEQUOIA S.A., LAUSANNE, CH, vol. 123, no. 1, 30 mars 2007 (2007-03-30) , pages 391-399, XP022011225 ISSN: 0925-4005
- KIM H-J ET AL: "A direct analysis of nanomolar metal ions in environmental water samples with Nafion-coated microelectrodes" ELECTROCHIMICA ACTA, ELSEVIER SCIENCE PUBLISHERS, BARKING, GB, vol. 50, no. 1, 15 novembre 2004 (2004-11-15), pages 205-210, XP004603611 ISSN: 0013-4686
- KIM P ET AL: "An electrochemical interface for integrated biosensors" PROCEEDINGS OF IEEE SENSORS 2003. 2ND. IEEE INTERNATIONAL CONFERENCE ON SENSORS. TORONTO, CANADA, OCT. 22 - 24, 2003; [IEEE INTERNATIONAL CONFERENCE ON SENSORS], NEW YORK, NY : IEEE, US, vol. CONF. 2, 22 octobre 2003 (2003-10-22) , pages 1036-1040VOL.2, XP010691066 ISBN: 978-0-7803-8133-9
- ALONSO LOMILLO M A ET AL: "Biosensor based on platinum chips for glucose determination" ANALYTICA CHIMICA ACTA, ELSEVIER, AMSTERDAM, NL, vol. 547, no. 2, 22 août 2005 (2005-08-22) , pages 209-214, XP004999141 ISSN: 0003-2670
- F. J. DEL CAMPO, O. ORDEIG, F. J. MUÑOZ: "Improved free chlorine amperometric sensor chip for drinking water applications" ANALYTICA CHIMICA ACTA, vol. 554, 19 septembre 2005 (2005-09-19), pages 98-104, XP002587694
- NEUMAN M R ET AL: "Batch-produced microfabricated ion-selective electrodes: reproducibility, reliability and yields" ENGINEERING IN MEDICINE AND BIOLOGY SOCIETY, 1995., IEEE 17TH ANNUAL C ONFERENCE MONTREAL, QUE., CANADA 20-23 SEPT. 1995, NEW YORK, NY, USA,IEEE, US, vol. 2, 20 septembre 1995 (1995-09-20), pages 1557-1558, XP010214855 ISBN: 978-0-7803-2475-6
- WANG S-H ET AL: "Development of a solid-state thick film calcium ion-selective electrode" SENSORS AND ACTUATORS B, ELSEVIER SEQUOIA S.A., LAUSANNE, CH, vol. 96, no. 3, 1 décembre 2003 (2003-12-01), pages 709-716, XP004475599 ISSN: 0925-4005

## Description

### Domaine technique

La présente invention se rapporte au domaine des capteurs électrochimiques. Elle concerne, plus particulièrement, un capteur électrochimique ampérométrique, à potentiel fixe, utilisé dans une sonde pour mesurer la teneur d'une substance oxydoréductible dissoute dans un liquide, et en particulier la teneur en chlore.

### Etat de la technique

La présente invention concerne les capteurs électrochimiques comprenant au moins une électrode de travail, une contre-électrode et une électrode de référence, pour lesquels on travaille à potentiel constant, et dans lesquels on mesure le courant circulant entre l'électrode de travail et la contre-électrode, induit par une réaction d'oxydoréduction au niveau de l'électrode de travail. De ce fait, l'invention ne concerne pas les capteurs basés sur des mesures potentiométriques, de type Ion-Selective Electrodes, comprenant deux électrodes, à savoir une électrode de travail et une électrode de référence, entre lesquelles on mesure une différence de potentiel. De tels capteurs sont décrits dans la publication de UI Haque et al. A MEMS fabricated cell electrophysiology biochip for in silico calcium measurements, Sensors and Actuors B; Elsevier Séquoia SA. Lausanne, CH, vol. 123, no. 1, 2007-03-30, pages 391-399, dans la publication de Neuman M R et al. Batch-produced microfabricated ion-selective electrodes, Engineering in medecine and biology society, 1995., IEEE 17th Annual Conférence Montreal, Vol. 2, 1995-09-20, pages 1557-1558, et dans la publication de Wang S-H et al, Development of a solid-state thick film calcium ion-selective electrode, Sensor and Actuators B, Elsevier Séquoia SA; Lausanne CH, vol. 96, no 3, 2003-12-01, pages 709-716. Ces capteurs sont utilisés dans le domaine des mesures biomédicales, pour mesurer le pH, la concentration en potassium ou en calcium dans les fluides biologiques.

L'invention ne concerne pas non plus les capteurs pour lesquels on mesure un courant mais en faisant varier le potentiel au cours du temps, tels que les capteurs utilisant la technique Square Wave Anodic Stripping Voltammetry (SWASAV) pour mesurer les métaux lourds, décrits dans la publication de KIM H-J et al. A direct analysis of nanomolar metal ions in environmental water samples with Nafion-coated microelectrodes, Electrochimica Acta, Elsevier Science Publisher, Barking GB, Vol. 50, no 1, 2004-11-15, pages 205-210. De tels capteurs contenant du mercure ne sont pas conformes aux normes environnementales.

Des capteurs ampérométriques du type de celui de la présente invention, sont par exemple décrits dans le brevet EP 0 586 982. Le brevet EP0586982 décrit un premier type de capteur intégré comprenant un substrat isolant sur lequel sont formées trois électrodes, à savoir une électrode de travail, une contre-électrode et une électrode de référence. Les électrodes sont ensuite recouvertes d'une membrane de diffusion, qui recouvre l'ensemble des trois électrodes.

Un autre type de capteur est également décrit et comprend un substrat isolant comprenant une couche d'isolant, dans laquelle sont réalisées des ouvertures. Chaque ouverture reçoit un dépôt de métal destiné à former l'une des électrodes. Une membrane de diffusion recouvre entièrement la partie conductrice active de l'électrode de travail en débordant par toute sa zone périphérique.

Un tel type de capteur nécessite d'adapter la couche d'isolant à chaque variante de réalisation des électrodes et donc de modifier l'ensemble du procédé de fabrication en fonction de la forme recherchée des électrodes.

De plus, l'agencement des couches nécessite de prévoir une zone de contact sous les électrodes. Par ailleurs, la dimension géométrique de l'électrode de travail doit être suffisante, de plusieurs centaines de micromètres à un millimètre, pour permettre d'y déposer la membrane.

Par ailleurs, on connait des capteurs utilisés pour mesurer des concentrations de protéines ou de glucose. Ces espèces n'étant pas électroactives, on doit utiliser une membrane dans laquelle est immobilisée une espèce électroactive servant d'intermédiaire pour la réaction. Cette espèce additionnelle, utilisée pour la mesure au niveau de l'électrode de travail, n'est donc pas dissoute dans le milieu. De tels capteurs sont décrits dans la publication de Kim P et al. An electrochemical interface for integrated biosensors. IEEE International Conférence on sensors, New York, vol. CONF. 2, 2003-10-22, pages 1036-1040 vol. 2., et dans la publication de Alonso Lomillo M A et al Biosensor Based on Platinum Chips for Glucose Determination, Analytica Chimica Acta, Elsevier, Amsterdam, NL, vol. 547, no 2, 2005-08-22, pages 209-214. Contrairement aux capteurs ampérométriques du type de l'invention pour lesquels la réaction se produit au niveau de l'électrode de travail, ces capteurs comprennent une membrane qui constitue le lieu de réaction des espèces électro-réactives non dissoutes, le capteur servant à détecter le courant de cette réaction. De tels capteurs présentent l'inconvénient d'avoir une durée de vie limitée car la membrane électro-réactive se charge en espèces à mesurer et a tendance à fuir après un certain temps d'utilisation.

Un but de la présente invention est donc de pallier ces inconvénients, en proposant un capteur ampérométrique pouvant être réalisé selon un procédé de réalisation simple et dont seule une étape doit être modifiée pour réaliser des électrodes présentant la forme recherchée, toutes les autres étapes du procédé étant communes quel que soit le type d'électrodes.

Un autre but de la présente invention est de proposer un capteur dont la durée de vie est améliorée notamment en augmentant l'adhésion de la membrane polymère utilisée comme membrane de diffusion sur un isolant choisi.

Un autre but de la présente invention est de proposer un procédé de fabrication permettant la réalisation d'une structure nanométrique d'isolant entre la membrane et les électrodes.

Un autre but de la présente invention est de proposer un capteur permettant d'accéder directement aux électrodes pour réaliser les connexions.

Un autre but de la présente invention est de proposer un capteur permettant d'avoir un substrat autre qu'un substrat de silicium, et notamment un substrat transparent.

Un autre but de la présente invention est de proposer un capteur permettant d'être miniaturisé, sans électrolyte liquide, et d'utiliser dans une même sonde deux mêmes capteurs dans un espace limité.

### Divulgation de l'invention

A cet effet, il est proposé un capteur électrochimique ampérométrique, à potentiel fixe, de mesure de la teneur d'une substance oxydoréductible dissoute dans un liquide, comprenant un substrat isolant, un jeu d'électrodes composé d'au moins trois électrodes, à savoir une électrode de travail, une contre-électrode et une électrode de référence, au moins lesdites électrode de travail et contre-électrode étant configurées sur ledit substrat isolant. Selon l'invention, au moins la dite électrode de travail est recouverte d'une couche d'isolant qui comprend au moins une ouverture laissant apparaitre au moins l'une desdites électrode de travail et l' électrode de travail apparaissant dans la dite ouverture est entièrement recouverte d' au moins une première membrane polymère de filtration, présentant une sélectivité à la dite substance oxydoréductible dissoute à mesurer et définissant une couche de diffusion de la dite substance oxydoréductible..

Selon la revendication 2, ladite contre-électrode est recouverte de ladite couche d'isolant, ladite couche d'isolant comprenant au moins une ouverture laissant apparaitre ladite contre-électrode, et la contre-électrode apparaissant dans ladite ouverture est entièrement recouverte d'au moins ladite première membrane polymère

De préférence, la membrane polymère recouvre entièrement ladite ouverture en débordant sur la couche d'isolant par toute sa zone périphérique.

Selon une variante de réalisation, le capteur peut comprendre une électrode de travail non-planaire disposée dans le substrat isolant, ladite membrane polymère étant réalisée de sorte que sa surface supérieure est au niveau du substrat isolant comprenant la contre-électrode.

Selon les variantes de réalisation, le capteur peut comprendre une seconde membrane polymère déposée sur la première membrane pour sélectionner les espèces à mesurer.

Selon les variantes de réalisation, la couche d'isolant peut comprendre plusieurs ouvertures séparées par des ilots de matériau isolant, de manière à laisser apparaitre un ensemble d'éléments d'électrode. La première membrane polymère peut alors recouvrir toutes les ouvertures ou peut comporter plusieurs éléments de membrane recouvrant respectivement chaque ouverture en débordant individuellement sur la couche d'isolant par toute leur zone périphérique respective.

D'une manière avantageuse, la couche d'isolant peut comprendre des ouvertures nanostructurées homogènes réparties sur la surface de l'électrode aléatoirement ou de manière géométrique.

De préférence, le substrat peut être réalisé dans un matériau choisi parmi le groupe comprenant le silicium, le verre, les céramiques et le quartz.

Selon les variantes de réalisation, au moins l'une des électrode de travail et contre-électrode peut présenter une forme choisie parmi le groupe de forme circulaire, microperforée ou interdigitée.

D'une manière avantageuse, le capteur peut comprendre des moyens de connexion pour relier les électrodes à un circuit de mesure, lesdits moyens de connexion étant directement reliés aux électrodes.

La présente invention concerne également un procédé de fabrication d'un capteur électrochimique ampérométrique, à potentiel fixe, tel que décrit ci-dessus, comprenant un substrat isolant, un jeu d'électrodes composé d'au moins trois électrodes, à savoir une électrode de travail, une contre-électrode et une électrode de référence, lesdites électrode de travail et contre-électrode étant configurée sur ledit substrat isolant, ledit procédé comprenant les étapes de:
- déposer sur ledit substrat isolant une couche d'un matériau conducteur,
- graver ledit matériau conducteur pour délimiter au moins l'une desdites électrode de travail et contre-électrode,
- déposer sur au moins la dite électrode de travail et éventuellement sur ladite contre-électrode une couche isolant,
- réaliser dans la couche d'isolant au moins une ouverture laissant apparaitre au moins l'une desdites électrode de travail et éventuellement au moins une ouverture laissant apparaître ladite contre-électrode, et
- couvrir entièrement l'électrode de travail apparaissant dans son ouverture et éventuellement couvrir entièrement la contre-électrode apparaissant dans son ouverture, d'au moins une membrane polymère de filtration, présentant une sélectivité à ladite substance oxydoréductible dissoute à mesurer et définissant une couche de diffusion de ladite substance oxydoréductible.

De préférence, le procédé peut comprendre en outre une étape dans laquelle la membrane est déposée de manière à couvrir la couche d'isolant et ses ouvertures.

La présente invention concerne également une sonde ampérométrique pour mesurer la teneur d'une substance oxydoréductible dissoute dans un liquide comprenant au moins un capteur tel que défini ci-dessus.

D' une manière avantageuse la sonde comprend au moins deux capteurs comprenant chacun une membrane sélective différente pour détecter respectivement une substance oxydoréductible dissoute différente de celle de l'autre capteur.

D'une manière avantageuse, la sonde peut comprendre un corps contenant des moyens de traitement des données et des moyens de transmission et une tête sèche, sans électrolyte et détachable, dans laquelle est disposé le capteur.

D'une manière avantageuse, la tête détachable est jetable et contient les informations de calibration de la sonde et un identificateur numérique unique de la tête.

L'invention concerne également l'utilisation d'un capteur tel que décrit ci-dessus pour mesurer la teneur d'une substance oxydoréductible dissoute dans un liquide,à un potentiel fixe.

Dans une variante la dite substance oxydoréductible peut être une espèce désinfectante dudit liquide .

Dans une variante d' utilisation ledit liquide est de l'eau la substance oxydoréductible désinfectante peut être est choisie parmi le groupe comprenant HOBr, HOCl, ClO₂, Cl₂, Chloramines et l'ozone.

### Brève description des dessins

D'autres caractéristiques de l'invention ressortiront de la description qui va suivre, faite en regard des dessins annexés, dans lesquels :
- la figure 1 est une vue de dessus et en coupe d'une variante de réalisation d'un capteur selon l'invention;
- la figure 2 est une vue en coupe d'une autre variante de réalisation d'un capteur selon l'invention;
- la figure 3 est une vue de dessus d'une autre variante de réalisation d'un capteur selon l'invention;
- la figure 4 représente les différentes étapes d'un procédé de fabrication selon l'invention;
- la figure 5 représente une vue en coupe schématisée de la tête d'une sonde selon l'invention;
- la figure 6 représente schématiquement le montage de deux capteurs utilisés dans une même tête de sonde;
- la figure 7 représente schématiquement le corps d'une sonde selon l'invention, et
- la figure 8 représente schématiquement une sonde selon l'invention.

### Mode(s) de réalisation de l'invention

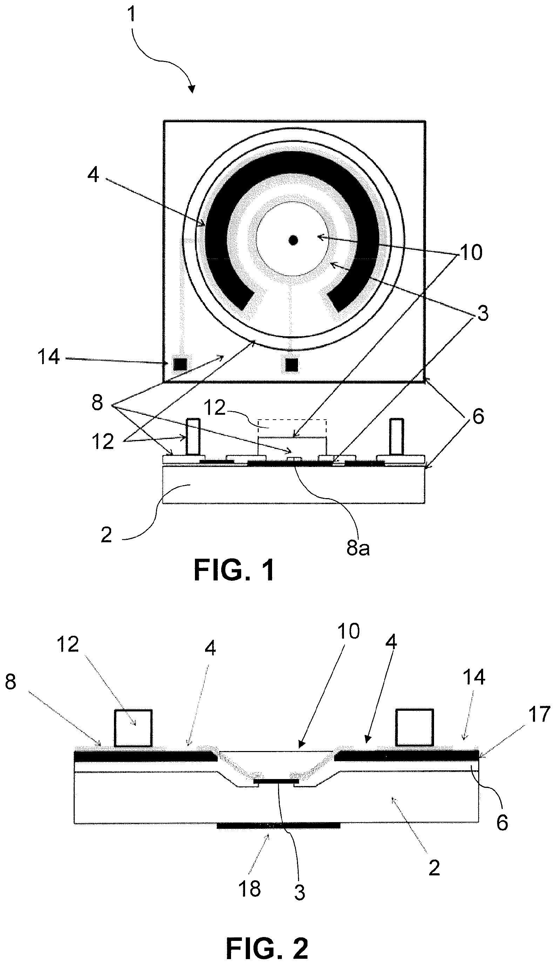

En référence à la figure 1, il est représenté un capteur 1 électrochimique ampérométrique destiné à la mesure de la teneur d'une substance oxydoréductible dissoute dans un liquide, comprenant un substrat isolant 2, un jeu d'électrodes composé d'une électrode de travail 3, d'une contre-électrode 4 et d'une électrode de référence (non représentée), l'électrode de travail 3 et la contre-électrode 4 étant configurées sur ledit substrat isolant 2. Dans la présente description, le terme "substrat isolant" désigne un substrat plan, isolant de manière intrinsèque (verre, céramique ou quartz par exemple) ou un substrat conducteur (silicium par exemple) rendu isolant par l'application d'une première couche d'isolant. Lorsque le substrat est isolant intrinsèquement, la première couche d'isolant n'est pas nécessaire.

Le principe de mesure ampérométrique est basé sur celui d'une cellule de Clark avec une électrode de travail, une contre-électrode et une électrode de référence. Ce principe d'ampérométrie est basé sur la mesure du courant entre l'électrode de travail et la contre-électrode qui est induit par une réaction d'oxydoréduction au niveau de l'électrode de travail. La référence est choisie de sorte que le courant mesuré à l'électrode de travail est directement proportionnel à la concentration d'une substance oxydoréductible dissoute dans le liquide à analyser. Cette substance oxydoréductible peut être par exemple une espèce désinfectante, telle que le chlore sous forme HOCl ou ClO₂. Le capteur détecte également les bio-chlores, ou le chlore produit par les systèmes d'électrolyse eau-sel. Le potentiel électrique de l'électrode de travail par rapport au liquide mesuré est obtenu par une électrode de référence séparée et est contrôlé par un système électronique potentiostatique.

Dans les exemples représentés, le substrat 2 est en silicium, découpé, après les traitements photolithographiques appropriés, d'une plaquette de silicium d'une manière traditionnelle dans la technique de fabrication des composants semi-conducteurs. Il est ensuite recouvert d'une première couche d'isolant 6, par exemple de l'oxyde de silicium SiO2, de manière à obtenir un substrat isolant.

L'électrode de travail 3 et la contre-électrode 4 sont déposées sous la forme d'un film fin métallique sur la première couche d'isolant 6. Les électrodes peuvent être en platine, or, titane, ruthénium ou en diamant amorphe.

Conformément à l'invention, l'électrode de travail 3 et la contre-électrode 4 sont recouvertes d'une seconde couche d'isolant 8, réalisée de préférence en nitrure de silicium (Si₃N₄), ladite seconde couche d'isolant 8 comprenant différentes ouvertures laissant apparaitre le métal pour former les surfaces actives de l'électrode de travail 3 et de la contre-électrode 4. La périphérie des électrodes reste recouverte et protégée par la seconde couche d'isolant 8. Cette seconde couche d'isolant est déposée à basse température pour ne pas nuire aux couches conductrices constituant l'électrode de travail 3 et la contre-électrode 4, qui peuvent être réalisées en différents type de métaux par exemple.

Les ouvertures, microscopiques ou nanoscopiques, peuvent être formées dans la seconde couche d'isolant 8 par les techniques traditionnelles de gravure au moyen d'un masque photolithographique. Cette technique permet de réaliser un substrat isolant comportant un film métallique et la seconde couche d'isolant commun à tous les capteurs, et de prévoir seulement lors de l'étape de gravure de la seconde couche d'isolant un masque photolithographique de géométrie adaptée à la forme souhaitée de l'électrode de travail et de la contre-électrode.

Ainsi, en fonction de la géométrie du masque, il est possible d'obtenir une structuration de la seconde couche d'isolant 8 de manière à créer des électrodes carrées, circulaires, microperforées pour former un réseau de micro-électrodes d'une dimension de quelques dizaines de micromètres, des électrodes interdigitées.

Par exemple, en référence à la figure 1, la seconde couche d'isolant 8 est gravée de manière à former des ouvertures circulaires en laissant un élément ou ilot 8a de matériau isolant au centre de l'électrode de travail 3.

La seconde couche d'isolant 8 peut également comprendre des ouvertures nanostructurées formées en réalisant sur la seconde couche d'isolant 8 des nanostructures aléatoires, qui sont ensuite gravées pour former lesdites ouvertures nanostructurées disposées aléatoirement sur la surface de l'électrode mais de manière homogène. Les nanostructures peuvent être formées par séparation de phases de deux polymères non miscibles par enduction centrifuge (spin coating). La taille latérale moyenne des ouvertures peut être ajustée en jouant sur les paramètres du procédé (nature des polymères, vitesse de l'enduction centrifuge et poids des polymères).

Les ouvertures réalisées dans la seconde couche d'isolant 8 sont remplies par une première membrane polymère 10 qui définit la couche de diffusion de l'oxydation ou de la réduction électrochimique. De préférence, la membrane 10 recouvre entièrement les ouvertures en débordant sur la couche d'isolant 8 par toute sa zone périphérique.

La première membrane polymère 10 est une membrane avec une certaine sélectivité à la substance oxydoréductible dissoute à mesurer.

Cette membrane 10 n'a aucun effet de mesure et constitue simplement une membrane de filtration de l'espèce à mesurer. Cette espèce est ensuite oxydée ou réduite au niveau de l'électrode de travail. La détermination de la teneur de l'espèce à mesurer est donc directe et s'effectue directement au niveau de l'électrode de travail.

Le capteur de l'invention ne comprend aucune membrane contenant une espèce électroréactive servant d'intermédiaire pour la réaction d'oxydoréduction.

Selon les variantes, une seule première membrane polymère continue peut être utilisée pour recouvrir toute les ouvertures. Selon d'autres variantes, la première membrane polymère est formée de plusieurs éléments de membrane qui recouvrent respectivement chaque ouverture en débordant individuellement sur les différents éléments de la seconde couche d'isolant 8 par toute leur zone périphérique respective.

Ainsi, la membrane de diffusion 10 adhère aux électrodes métalliques mais adhère également à la seconde couche d'isolant 8 au niveau de la périphérie des ouvertures et des ilots de matériau isolant laissés entre les ouvertures. De plus, la forme des ouvertures et des électrodes peut être choisie de manière à régler la proportion de surface de contact membrane polymère/couche d'isolant et membrane polymère/électrodes. Enfin, le matériau de la seconde couche d'isolant 8, tel que nitrure ou oxyde de silicium, permet d'établir des liaisons covalentes avec la membrane polymère 10 grâce à des traitements chimiques de surface au cours du procédé de fabrication.

Ainsi, l'adhésion de la membrane 10 est grandement améliorée, ce qui conduit à augmenter les performances du capteur en termes de sélectivité, de stabilité et de fiabilité, sur une période d'un an dans l'eau sans recalibration ou entretien.

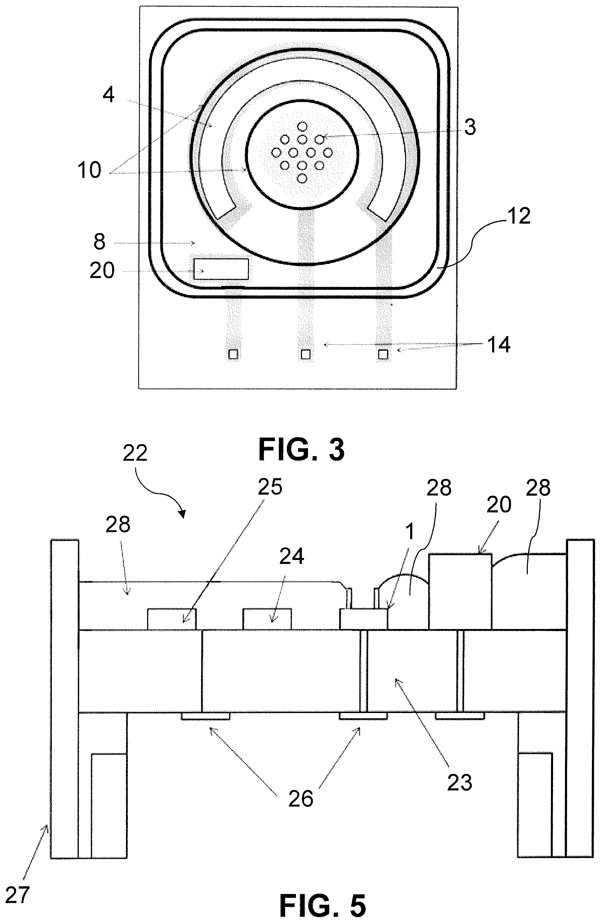

La première membrane polymère 10 est de préférence constituée par un hydrogel, tel qu'un hydrogel fait de préférence en poly-hydroxyéthylemétacrylate (polyHEMA). Elle est photopolymérisée sur la plaquette de silicium avec un masque dont la géométrie est définie de manière à ce que la membrane 10 recouvre soit les ouvertures de la seconde couche d'isolant 8 délimitant l'électrode de travail seule, comme le cercle représenté sur la figure 1, ou l'électrode de travail et la contre-électrode, soit le capteur entier, comme représenté sur la figure 3.

La première membrane polymère 10 définit les conditions de diffusion, et crée ainsi une condition de diffusion limite reproductible, définie par l'épaisseur de la membrane, permettant d'obtenir un signal ampérométrique indépendant du débit du liquide autour du capteur, et de protéger les électrodes des dépôts de particules. Ainsi, le capteur obtenu ne nécessite pas d'entretien pendant une année. S'il est changé au bout d'une année, le capteur n'aura nécessité aucun entretien intermédiaire. La membrane déposée sur les électrodes permet également d'utiliser un potentiostat simple, puisque la membrane protège les électrodes de tout dépôt. La sélectivité du capteur pour la substance oxydoréductible est définie par le potentiel approprié appliqué entre l'électrode de référence et l'électrode de travail, ainsi que par la définition de la polymérisation de la membrane.

Une seconde membrane polymère 12 peut être déposée au-dessus de la première membrane polymère 10, avec par exemple une épaisseur trois à six fois supérieure à celle de la première membrane polymère 10. Une telle seconde membrane 12 peut être réalisée en polysiloxane photopolymérisé sur la plaquette de silicium. Selon la surface recouverte, la seconde membrane 12 a pour fonction de choisir l'espèce à mesurer, tel que l'oxygène dissous, et/ou de définir les limites latérales de la résine époxy utilisée pour l'encapsulation finale. L'étape finale d'encapsulation du capteur est ainsi facilitée.

L'électrode de référence est réalisée par une fine couche d'Ag-AgCl sur la plaquette de silicium ou par une structure plane métallique liée à la plaquette ou simplement par un fil lié à la plaquette et composé d'Ag-AgCl, réalisant une pseudo-référence. D'une manière très avantageuse, l'électrode de référence est solide, sans gel et sans liquide, ce qui permet de ne pas avoir à effectuer de maintenance.

Le capteur comprend également des ouvertures dans la seconde couche d'isolant 8 sur le côté de la puce, également relié aux électrodes en dessous, autorisant les contacts électriques 14 des fils de liaison pour relier les électrodes à un circuit de mesure externe au capteur ampérométrique. La seconde couche d'isolant 8 étant disposée sur toute la couche métallique pour réaliser les électrodes, ces dernières sont donc directement accessibles sur le côté du capteur à travers cette couche pour réaliser les contacts électriques.

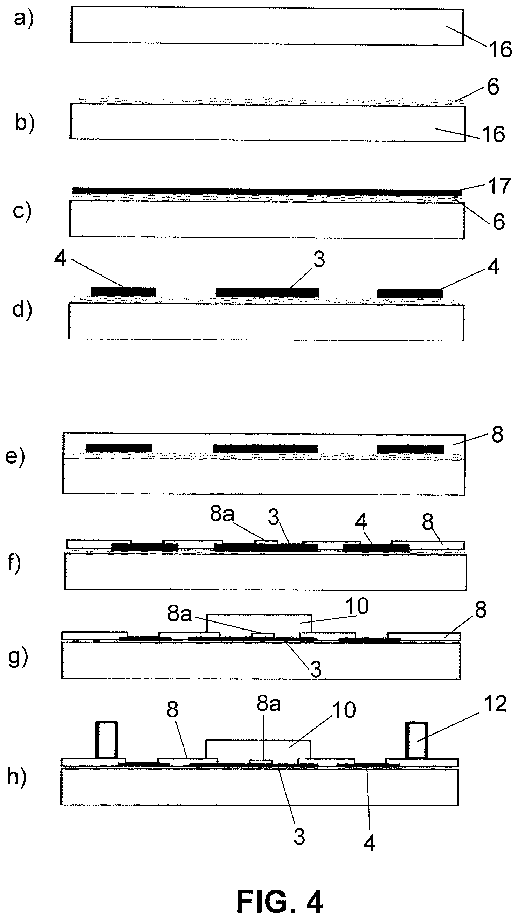

Le capteur selon l'invention peut être obtenu selon le procédé représenté schématiquement sur la figure 4. On part à l'étape a) d'une plaquette de silicium 16. A l'étape b), cette plaquette est oxydée pour former la première couche d'isolant 6 et constituer ainsi le substrat isolant 2. A l'étape c), on dépose sur le substrat une fine couche de métal 17, dans lequel seront formées l'électrode de travail 3 et la contre-électrode 4. A l'étape d), la couche de métal 17 est gravée pour délimiter grossièrement les électrodes 3 et 4. A l'étape e), une seconde couche d'isolant 8 est déposée à basse température sur la couche de métal 17. A l'étape f), on forme les ouvertures dans la couche d'isolant 8 pour laisser apparaitre précisément la surface active de l'électrode de travail 3 et de la contre-électrode 4. Par exemple, dans la figure 1, un ilot 8a d'isolant est maintenu au centre de l'électrode. Cet ilot peut être de diverses tailles, voire se répéter périodiquement sur la surface de l'électrode, et posséder des dimensions microscopiques, de l'ordre de quelques micromètres à quelques dizaines de micromètres, ou nanométriques, inférieure au micromètre. Sa répétition peut être géométrique ou aléatoire, mais homogène sur l'électrode. Pour cela, on utilise un masque photolithographique et un procédé de gravure par attaque chimique, qui permet, en une seule étape, de former l'électrode de travail et la contre-électrode ayant la configuration désirée en utilisant simplement un masque ayant la configuration correspondante. Les autres étapes précédentes peuvent être communes à tous les capteurs, quelle que soit la géométrie des électrodes.

A l'étape g), on dépose par photopolymérisation et au moyen d'un masque approprié, la première membrane polymère 10 d'hydrogel de polyHEMA sur les ouvertures de la seconde couche d'isolant 8 délimitant l'électrode de travail 3. Comme on l'a vu ci-dessus, la première membrane 10 définit la couche de diffusion et présente une adhésion améliorée du fait de son adhésion préférentielle aux différents éléments de la seconde couche d'isolant 8.

A l'étape h), on dépose par photopolymérisation la seconde membrane polymère 12 à base de polysiloxane pour préparer l'étape d'encapsulation du capteur. En fonction de la forme du masque de photopolymérisation, cette seconde membrane 12 peut recouvrir également la surface de la première membrane polymère 10, et permettre de conférer une autre sélectivité au capteur.

Le capteur de l'invention peut être réalisé selon les procédés de photolithographie classiquement utilisés pour réaliser les composants semi-conducteurs à partir de plaquettes de silicium.

Ainsi, les avantages de la production par lots des plaquettes de silicium permettent une excellente reproductibilité de l'épaisseur des membranes, ainsi qu'une excellente reproductibilité de la sensibilité de la sonde obtenue pour l'espèce oxydoréductible. Comparé aux électrodes standards avec réactifs, le rapport signal/bruit est très élevé en raison de la géométrie de la surface active bien définie des électrodes et de la couche de diffusion bien contrôlée.

En référence à la figure 2, il est représenté une autre variante de réalisation du capteur selon l'invention. Selon cette variante, le substrat 2 a une structure non planaire, obtenue par exemple par une attaque chimique anisotrope d'un silicium conducteur dopé de type p. La première couche d'isolant 6, la couche métallique 17 et la seconde couche d'isolant 8 sont appliquées comme décrit ci-dessus. L'électrode de travail 3 et la contre-électrode 4 sont formées par les ouvertures dans la seconde couche d'isolant 8. Une première membrane de type hydrogel de poly HEMA est appliquée sur la seconde couche d'isolant 8 et son ouverture définissant l'électrode de travail 3. Une seconde membrane de polysiloxane 12 est déposée pour préparer l'encapsulation. Les contacts électriques 14 sont prévus ainsi que des contacts arrière 18 pour l'électrode de travail 3.

L'électrode de travail 3 a été appliquée en suivant la configuration du substrat 2, de sorte qu'elle est renfoncée dans la plaquette de silicium et est ainsi protégée. De plus, dans cette configuration, le contact de l'électrode de travail est réalisé en utilisant directement la plaquette de silicium.

En référence à la figure 3, il est représenté une autre variante de réalisation du capteur selon l'invention. Les références désignent les mêmes éléments que sur les figures précédentes. Dans cette variante, l'électrode de travail 3 est sous forme d'un réseau de micro-électrodes et des éléments de la première membrane polymère 10 recouvrent la seconde couche d'isolant 8 et les ouvertures microstructurées ou nanostructurées, délimitant l'électrode de travail 3 et la contre-électrode 4. Cependant, ce réseau peut être dimensionné sous la forme de nanostructure répartie aléatoirement mais d'une manière homogène sur l'électrode. L'électrode de référence 20 Ag-AgCl est intégrée au capteur, et est entourée par la deuxième membrane polymère 12, permettant son contact avec le milieu aqueux après encapsulation du capteur dans de la résine. Les contacts électriques sont indiqués par la référence 14.

Le capteur selon l'invention est utilisé dans une sonde ampérométrique pour mesurer la teneur d'une substance oxydoréductible dissoute dans un liquide, cette substance oxydoréductible dissoute étant par exemple une espèce désinfectante dudit liquide. D'une manière particulièrement avantageuse, le capteur est intégré dans une tête de mesure sèche, donc sans électrolyte, détachable, qui peut être montée de manière amovible à un corps de sonde, comprenant les moyens de traitement et de transmission des données.

Une telle tête détachable 22 est représentée sur la figure 5. Elle comprend un circuit imprimé 23 sur lequel sont montés, du côté opposé au corps de la sonde, le capteur selon l'invention 1 comprenant l'électrode de travail et la contre-électrode, l'électrode de référence, un circuit intégré d'interface pour l'amplification et le traitement du signal 24 pour transformer le signal de courant du capteur 1 en un signal de tension et l'amplifier, ce circuit intégré 24 pouvant également mesurer la température, ainsi qu'un circuit intégré de type mémoire 25. Ce circuit intégré de type mémoire contient les paramètres de calibration de la tête détachable ainsi que les référence de fabrication et un numéro unique d'identification. Ce numéro peut servir à coder la communication avec le corps de sonde. Ainsi, chaque sonde ne peut opérer qu'avec une sélection de tête, sélectionnée à la fabrication. La face arrière du circuit imprimé 23 comprend des contacts simples 26 pour transmettre le signal électrique provenant du corps de la sonde, et proportionnel à l'espèce oxydoréductible à mesurer. Le circuit imprimé 23 et tous ses composants sont encapsulés ou moulés dans un boitier 27 en plastique, tel que du PVC, et sont recouverts d'une couche de résine protectrice polymère, par exemple de l'époxy 28, en laissant accessibles le capteur 1 et l'électrode de référence 20. La tête de mesure de la sonde 22 ne contient donc aucun produit chimique ni réactif et est donc bio-compatible avec l'eau ou tout autre liquide.

Les paramètres de calibration, tels que le zéro ou la sensibilité, et un numéro de codage et d'identification, peuvent être enregistrés dans le circuit de type mémoire 25 de la tête pendant sa fabrication. Ils seront ensuite récupérés par le corps de la sonde pour l'auto-calibration.

La tête de mesure peut être enlevée et remplacée aisément sur place par l'utilisateur sans l'aide d'un technicien spécialisé.

D'une manière avantageuse, deux capteurs selon l'invention peuvent être prévus dans la tête de mesure. Ces capteurs sont montés et connectés de manière à obtenir deux signaux électroniques de l'espèce à mesurer.

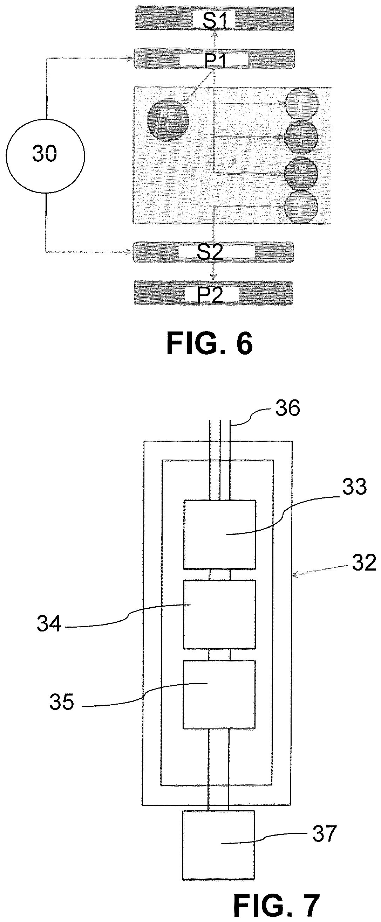

Le schéma de montage des deux capteurs est représenté sur la figure 6. Le circuit comprend une batterie 30, alimentant un premier potentiostat P1 et un second potentiostat P2. Le potentiostat P1 est relié à l'électrode de référence RE1, à l'électrode de travail WE1 et à la contre-électrode CE1 du premier capteur, ainsi qu'à la contre-électrode CE2 du second capteur. Le second potentiostat P2 est relié à l'électrode de travail WE2 du second capteur. Le premier potentiostat P1 donne un premier signal S1 et le second potentiostat P2 donne un second signal S2. Cela permet une redondance dans le signal avec deux signaux chlores mais une seule électrode de référence. Le circuit de traitement du signal peut ensuite combiner linéairement les deux signaux, en délivrant la somme et la différence, de manière à obtenir un signal d'état opérationnel de la sonde, en particulier de la qualité de la mesure de l'espèce électrochimique détectée. Un algorithme simple peut être introduit dans le logiciel du corps de la sonde pour calculer la qualité de la mesure, donc le vieillissement de la sonde, et en particulier pour émettre un signal d'alarme si l'un des deux capteurs est défectueux.

D'une manière avantageuse, la sonde peut comprendre au moins deux capteurs de l'invention, comprenant chacun une membrane sélective différente pour détecter respectivement une substance oxydoréductible dissoute différente de celle de l'autre capteur.

Le boitier 27 de la tête de mesure 22 peut comprendre un pas de vis coopérant avec un filetage correspondant prévu sur le corps de la sonde.

En référence à la figure 7, le corps 32 de la sonde peut être réalisé en plastique ou en métal. Il comprend un circuit imprimé sur lequel sont montés un circuit d'interface 33, un circuit de décodage et de traitement des données 34, tel qu'un microcontrôleur, et des moyens de transmission des données 35 afin de transmettre le signal représentant la teneur de l'espèce oxydoréductible mesurée à l'extérieur de la sonde. Ces moyens de transmission peuvent être un système radio, par exemple GSM, ou un câble électrique. Le corps de la sonde comprend également des moyens de connexion 36, agencés pour relier le circuit imprimé du corps de la sonde aux contacts 26 prévus sur la tête de mesure 22. Il est également prévu une batterie 37, alimentant le circuit imprimé du corps de la sonde. Ces moyens peuvent également être réalisés par onde électromagnétique de faible portée entre la tête de mesure et le corps de la sonde.

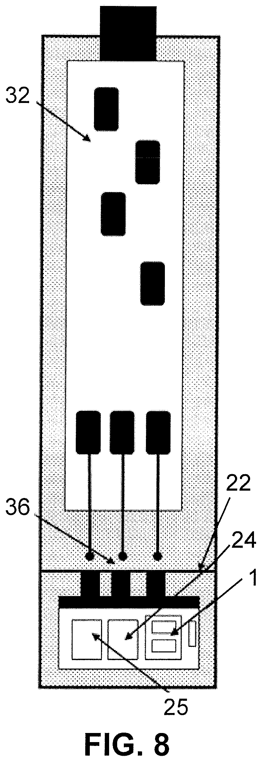

Lorsque la tête de mesure 22 est montée sur le corps 32, on obtient une sonde de mesure telle que représentée sur la figure 8. Lorsque le capteur 1 doit être périodiquement remplacé, seule la tête de mesure 22 doit être changée. Le corps 32 de la sonde qui contient le circuit de traitement des données n'a pas besoin d'être remplacé.

La sonde obtenue permet notamment de mesurer la qualité de l'eau en ligne, directement dans les canalisations. Elle présente l'avantage de résister aux hautes pressions (10 bars), et de ne pas nécessiter de maintenance. Seule la tête de mesure comprenant le capteur peut être facilement changée, par exemple une fois par an. Elle n'utilise pas de réactifs chimiques pour détecter les espèces à analyser et est donc particulièrement écologique et ne peut pas polluer le fluide à mesurer, par exemple de l'eau potable.

Il est bien évident que, dans une autre variante, le capteur peut être intégré dans une sonde d'une seule pièce.

## Revendications

1. Capteur (1) électrochimique ampérométrique, à potentiel fixe, de mesure de la teneur d'une substance oxydoréductible dissoute dans un liquide, comprenant un substrat isolant (2), un jeu d'électrodes composé d'au moins trois électrodes, à savoir une électrode de travail (3), une contre-électrode (4) et une électrode de référence (20), lesdites électrode de travail (3) et contre-électrode (4) étant configurées sur ledit substrat isolant (2), **caractérisé en ce qu'**au moins ladite électrode de travail (3) est recouverte d'une couche d'isolant (8) qui comprend au moins une ouverture laissant apparaitre au moins ladite électrode de travail (3), et **en ce que** l'électrode de travail (3) apparaissant dans ladite ouverture est entièrement recouverte d'au moins une première membrane polymère (10) de filtration, présentant une sélectivité à ladite substance oxydoréductible dissoute à mesurer et définissant une couche de diffusion de ladite substance oxydoréductible.

2. Capteur selon la revendication 1, **caractérisé en ce que** ladite contre-électrode (4) est recouverte de ladite couche d'isolant (8), ladite couche d'isolant comprenant au moins une ouverture laissant apparaitre ladite contre-électrode (4), et **en ce que** la contre-électrode (4) apparaissant dans ladite ouverture est entièrement recouverte d'au moins ladite première membrane polymère (10).

3. Capteur selon l'une quelconque des revendications précédentes, **caractérisé en ce que** ladite membrane polymère (10) recouvre entièrement ladite ouverture en débordant sur la couche d'isolant (8) par toute sa zone périphérique.

4. Capteur selon l'une quelconque des revendications précédentes, **caractérisé en ce que** l'électrode de travail est non-planaire et est disposée dans le substrat isolant, ladite membrane polymère (10) étant réalisée de sorte que sa surface supérieure est au niveau du substrat isolant comprenant la contre-électrode.

5. Capteur selon l'une quelconque des revendications précédentes, **caractérisé en ce qu'**il comprend une seconde membrane polymère (12) déposée sur la première membrane (10) pour sélectionner les espèces à mesurer.

6. Capteur selon l'une quelconque des revendications précédentes, **caractérisé en ce que** la couche d'isolant (8) comprend plusieurs ouvertures séparées par des ilots (8a) de matériau isolant, de manière à laisser apparaitre un ensemble d'éléments d'électrode.

7. Capteur selon la revendication 6 , **caractérisé en ce que** la première membrane polymère (10) recouvre toutes les ouvertures.

8. Capteur selon la revendication 6 , **caractérisé en ce que** la première membrane polymère (10) comporte plusieurs éléments de membrane recouvrant respectivement chaque ouverture en débordant individuellement sur la couche d'isolant (8) par toute leur zone périphérique respective.

9. Capteur selon l'une quelconque des revendications précédentes **caractérisé en ce que** la couche d'isolant (8) comprend des ouvertures nanostructurées homogènes.

10. Capteur selon l'une quelconque des revendications précédentes, **caractérisé en ce que** le substrat (2) est réalisé dans un matériau choisi parmi le groupe comprenant le silicium, le verre, les céramiques et le quartz.

11. Capteur selon l'une quelconque des revendications précédentes, **caractérisé en ce que** au moins l'une des électrodes de travail (3) et contre-électrode (4) présente une forme choisie parmi le groupe de forme circulaire, microperforée ou interdigitée.

12. Capteur selon l'une quelconque des revendications précédentes, **caractérisé en ce qu'**il comprend des moyens de connexion pour relier les électrodes à un circuit de mesure, lesdits moyens de connexion étant directement reliés aux électrodes.

13. Procédé de fabrication d'un capteur électrochimique ampérométrique, à potentiel fixe, comprenant un substrat isolant (2), un jeu d'électrodes composé d'au moins trois électrodes, à savoir une électrode de travail (3), une contre-électrode (4) et une électrode de référence (20), lesdites électrode de travail (3) et contre-électrode (4) étant configurées sur ledit substrat isolant (2), selon l'une quelconque des revendications 1 à 12, **caractérisé en ce qu'**il comprend les étapes de:
- déposer sur ledit substrat isolant (2) une couche d'un matériau conducteur (17),
- graver ledit matériau conducteur (17) pour délimiter au moins ladite électrode de travail (3) et ladite contre-électrode (4),
- déposer sur au moins ladite électrode de travail (3) et éventuellement sur ladite contre-électrode (4) une couche d'isolant (8),
- réaliser dans la couche d'isolant (8) au moins une ouverture laissant apparaitre au moins ladite électrode de travail (3) et éventuellement au moins une ouverture laissant apparaitre ladite contre-électrode (4), et
- couvrir entièrement l'électrode de travail apparaissant dans son ouverture et éventuellement couvrir entièrement la contre-électrode (4) apparaissant dans son ouverture, d'au moins une membrane polymère (10) de filtration, présentant une sélectivité à ladite substance oxydoréductible dissoute à mesurer et définissant une couche de diffusion de ladite substance oxydoréductible.

14. Procédé selon la revendication 13, **caractérisé en ce que** la membrane polymère (10) est déposée de manière à couvrir la couche d'isolant (8) et ses ouvertures.

15. Sonde ampérométrique pour mesurer la teneur d'une substance oxydoréductible dans un liquide comprenant au moins un capteur (1) selon l'une quelconque des revendications 1 à 12.

16. Sonde selon la revendication 15, **caractérisée en ce qu'**elle comprend au moins deux capteurs comprenant chacun une membrane sélective différente pour détecter respectivement une substance oxydoréductible dissoute différente de celle de l'autre capteur.

17. Sonde selon l'une quelconque des revendications 15 et 16, **caractérisée en ce qu'**elle comprend un corps (32) contenant des moyens de traitement des données et des moyens de transmission et une tête (22) sèche, sans électrolyte et détachable, dans laquelle est disposé le capteur (1).

18. Sonde selon la revendication 17, **caractérisée en ce que** ladite tête de mesure détachable est jetable et contient les informations de calibration de la sonde et un identificateur numérique unique de la tête.

19. Utilisation d'un capteur selon l'une quelconque des revendications 1 à 12 pour mesurer la teneur d'une substance oxydoréductible dissoute dans un liquide, à un potentiel fixe.

20. Utilisation d'un capteur selon la revendication 19, **caractérisée en ce que** ladite substance oxydoréductible est une espèce désinfectante dudit liquide.

21. Utilisation d'un capteur selon la revendication 20, **caractérisée en ce que** ledit liquide est de l'eau et **en ce que** la substance oxydoréductible désinfectante est choisie parmi le groupe comprenant HOBr, HOCl, ClO₂, Cl₂, Chloramines et l'ozone.

## Patentansprüche

1. Elektrochemischer amperometrischer Sensor (1) mit konstantem Potential zum Messen des Gehalts an einer in einer Flüssigkeit gelösten redoxfähigen Substanz, umfassend ein isolierendes Substrat (2), einen Elektrodensatz, der aus mindestens drei Elektroden besteht, und zwar einer Arbeitselektrode (3), einer Gegenelektrode (4) und einer Referenzelektrode (20), wobei die Arbeitselektrode (3) und die Gegenelektrode (4) auf dem isolierenden Substrat (2) ausgebildet sind, **dadurch gekennzeichnet, dass** mindestens die Arbeitselektrode (3) mit einer Isolierstoffschicht (8) bedeckt ist, die mindestens eine Öffnung umfasst, die mindestens die Arbeitselektrode (3) erscheinen lässt, und dass die in der Öffnung erscheinende Arbeitselektrode (3) vollständig mit mindestens einer ersten Filtrations-Polymermembran (10) bedeckt ist, die eine Selektivität für die zu messende gelöste redoxfähige Substanz aufweist und eine Diffusionsschicht für die redoxfähige Substanz bildet.

2. Sensor nach Anspruch 1, **dadurch gekennzeichnet, dass** die Gegenelektrode (4) mit der Isolierstoffschicht (8) bedeckt ist, wobei die Isolierstoffschicht mindestens eine Öffnung umfasst, welche die Gegenelektrode (4) erscheinen lässt, und dass die in dieser Öffnung erscheinende Gegenelektrode (4) vollständig mit mindestens der ersten Polymermembran (10) bedeckt ist.

3. Sensor nach einem der vorhergehenden Ansprüche, **dadurch gekennzeichnet, dass** die Polymermembran (10) die Öffnung vollständig bedeckt und dabei mit ihrem gesamten Umfangsbereich über die Isolierstoffschicht (8) übersteht.

4. Sensor nach einem der vorhergehenden Ansprüche, **dadurch gekennzeichnet, dass** die Arbeitselektrode nicht planar ist und im isolierenden Substrat angeordnet ist, wobei die Polymermembran (10) so ausgeführt ist, dass ihre obere Fläche auf Höhe des die Gegenelektrode umfassenden isolierenden Substrats ist.

5. Sensor nach einem der vorhergehenden Ansprüche, **dadurch gekennzeichnet, dass** er eine zweite Polymermembran (12) umfasst, die auf die erste Membran (10) aufgebracht ist, um die zu messenden Spezies zu selektieren.

6. Sensor nach einem der vorhergehenden Ansprüche, **dadurch gekennzeichnet, dass** die Isolierstoffschicht (8) mehrere durch Inseln (8a) aus isolierendem Material getrennte Öffnungen umfasst, die eine Anordnung von Elektrodenelementen erscheinen lassen.

7. Sensor nach Anspruch 6, **dadurch gekennzeichnet, dass** die erste Polymermembran (10) alle Öffnungen bedeckt.

8. Sensor nach Anspruch 6, **dadurch gekennzeichnet, dass** die erste Polymermembran (10) mehrere Membranelemente aufweist, die jeweils jede Öffnung bedecken und dabei einzeln mit ihrem gesamten jeweiligen Umfangsbereich über die Isolierstoffschicht (8) überstehen.

9. Sensor nach einem der vorhergehenden Ansprüche, **dadurch gekennzeichnet, dass** die Isolierstoffschicht (8) homogene nanostrukturierte Öffnungen umfasst.

10. Sensor nach einem der vorhergehenden Ansprüche, **dadurch gekennzeichnet, dass** das Substrat (2) aus einem Material ausgeführt ist, das aus der Gruppe gewählt ist, die Silicium, Glas, Keramiken und Quarz umfasst.

11. Sensor nach einem der vorhergehenden Ansprüche, **dadurch gekennzeichnet, dass** mindestens eine der Arbeitselektroden (3) und Gegenelektroden (4) eine Form aufweist, die aus der Gruppe der runden, mikroperforierten oder ineinandergreifenden Formen gewählt ist.

12. Sensor nach einem der vorhergehenden Ansprüche, **dadurch gekennzeichnet, dass** er Anschlussmittel umfasst, um die Elektroden mit einem Messkreis zu verbinden, wobei die Anschlussmittel direkt mit den Elektroden verbunden sind.

13. Verfahren zur Herstellung eines elektrochemischen amperometrischen Sensors mit konstantem Potential, umfassend ein isolierendes Substrat (2), einen Elektrodensatz, der aus mindestens drei Elektroden besteht, und zwar einer Arbeitselektrode (3), einer Gegenelektrode (4) und einer Referenzelektrode (20), wobei die Arbeitselektrode (3) und die Gegenelektrode (4) auf dem isolierenden Substrat (2) ausgebildet sind, nach einem der vorhergehenden Ansprüche 1 bis 12, **dadurch gekennzeichnet, dass** es die folgenden Schritte umfasst:
- Aufbringen einer Schicht eines leitfähigen Materials (17) auf das isolierende Substrat (2),
- Ätzen des leitfähigen Materials (17), um mindestens die Arbeitselektrode (3) und die Gegenelektrode (4) zu begrenzen,
- Aufbringen einer Isolierstoffschicht (8) auf mindestens die Arbeitselektrode (3) und gegebenenfalls auf die Gegenelektrode (4),
- Ausführen mindestens einer Öffnung in der Isolierstoffschicht (8), die mindestens die Arbeitselektrode (3) erscheinen lässt, und gegebenenfalls mindestens einer Öffnung, welche die Gegenelektrode (4) erscheinen lässt, und
- vollständiges Bedecken der in ihrer Öffnung erscheinenden Arbeitselektrode und gegebenenfalls vollständiges Bedecken der in ihrer Öffnung erscheinenden Gegenelektrode (4) mit mindestens einer Filtrations-Polymermembran (10), die eine Selektivität für die zu messende gelöste redoxfähige Substanz aufweist und eine Diffusionsschicht für die redoxfähige Substanz bildet.

14. Verfahren nach Anspruch 13, **dadurch gekennzeichnet, dass** die Polymermembran (10) so aufgebracht wird, dass sie die Isolierstoffschicht (8) und ihre Öffnungen bedeckt.

15. Amperometrische Sonde zum Messen des Gehalts an einer redoxfähigen Substanz in einer Flüssigkeit mit mindestens einem Sensor (1) nach einem der Ansprüche 1 bis 12.

16. Sonde nach Anspruch 15, **dadurch gekennzeichnet, dass** sie mindestens zwei Sensoren umfasst, die jeweils eine unterschiedliche selektive Membran umfassen, um jeweils eine gelöste redoxfähige Substanz zu detektieren, die verschieden von der des anderen Sensors ist.

17. Sonde nach einem der Ansprüche 15 und 16, **dadurch gekennzeichnet, dass** sie ein Gehäuse (32) umfasst, das Datenverarbeitungsmittel und Übertragungsmittel enthält, und einen trockenen und abnehmbaren Kopf (22) ohne Elektrolyt, in dem der Sensor (1) angeordnet ist.

18. Sonde nach Anspruch 17, **dadurch gekennzeichnet, dass** der abnehmbare Messkopf ein Einweg-Messkopf ist und die Kalibrierungsinformationen der Sonde und eine einmalige numerische Kennung des Kopfes enthält.

19. Verwendung eines Sensors nach einem der Ansprüche 1 bis 12 zum Messen des Gehalts an einer in einer Flüssigkeit gelösten redoxfähigen Substanz mit einem konstanten Potential.

20. Verwendung eines Sensors nach Anspruch 19, **dadurch gekennzeichnet, dass** die redoxfähige Substanz eine desinfizierende Spezies der Flüssigkeit ist.

21. Verwendung eines Sensors nach Anspruch 20, **dadurch gekennzeichnet, dass** die Flüssigkeit Wasser ist und dass die redoxfähige desinfizierende Substanz aus der Gruppe gewählt ist, die HOBr, HOCl, ClO₂, Cl₂, Chloramine und Ozon umfasst.

## Claims

1. Amperometric electrochemical sensor (1), with a fixed potential, for measuring the content of an oxido-reducible substance dissolved in a liquid, comprising an insulating substrate (2), a set of electrodes which is composed of at least three electrodes, namely a working electrode (3), a counter electrode (4) and a reference electrode (20), said working electrode (3) and counter electrode (4) being configured on said insulating substrate (2), **characterized in that** at least said working electrode (3) is covered with an insulating layer (8) which comprises at least one opening revealing at least said working electrode (3), and **in that** the working electrode (3) appearing in said opening is entirely covered with at least a first polymer filtration membrane (10), having a selectivity for said dissolved oxido-reducible substance to be measured and defining a diffusion layer for said oxido-reducible substance.

2. Sensor according to Claim 1, **characterized in that** said counter electrode (4) is covered with said insulating layer (8), said insulating layer comprising at least one opening that reveals said counter electrode (4), and **in that** the counter electrode (4) appearing in said opening is entirely covered with at least said first polymer membrane (10).

3. Sensor according to either one of the preceding claims, **characterized in that** said polymer membrane (10) entirely covers said opening by extending onto the insulating layer (8) via the entire peripheral zone thereof.

4. Sensor according to any one of the preceding claims, **characterized in that** the working electrode is nonplanar and is positioned in the insulating substrate, said polymer membrane (10) being produced so that the upper surface thereof is level with the insulating substrate comprising the counter electrode.

5. Sensor according to any one of the preceding claims, **characterized in that** it comprises a second polymer membrane (12) deposited on the first membrane (10) in order to select the species to be measured.

6. Sensor according to any one of the preceding claims, **characterized in that** the insulating layer (8) comprises several openings separated by islands (8a) of insulating material, so as to reveal a set of electrode elements.

7. Sensor according to Claim 6, **characterized in that** the first polymer membrane (10) covers all of the openings.

8. Sensor according to Claim 6, **characterized in that** the first polymer membrane (10) comprises several membrane elements respectively covering each opening by individually extending onto the insulating layer (8) via the respective entire peripheral zone thereof.

9. Sensor according to any one of the preceding claims, **characterized in that** the insulating layer (8) comprises homogeneous nanostructured openings.

10. Sensor according to any one of the preceding claims, **characterized in that** the substrate (2) is made from a material selected from the group comprising silicon, glass, ceramics and quartz.

11. Sensor according to any one of the preceding claims, **characterized in that** at least one of the working electrode (3) and counter electrode (4) has a shape selected from the group of circular, microperforated or interdigitated shape.

12. Sensor according to any one of the preceding claims, **characterized in that** it comprises connection means for connecting the electrodes to a measuring circuit, said connection means being directly connected to the electrodes.

13. Process for manufacturing an amperometric electrochemical sensor, with a fixed potential, comprising an insulating substrate (2), a set of electrodes which is composed of at least three electrodes, namely a working electrode (3), a counter electrode (4) and a reference electrode (20), said working electrode (3) and counter electrode (4) being configured on said insulating substrate (2), according to any one of Claims 1 to 12, **characterized in that** it comprises the steps of:
- depositing a layer of a conductive material (17) on said insulating substrate (2),
- etching said conductive material (17) in order to delimit at least said working electrode (3) and said counter electrode (4),
- depositing an insulating layer (8) on at least said working electrode (3) and optionally on said counter electrode (4),
- producing in the insulating layer (8) at least one opening that reveals at least said working electrode (3) and optionally at least one opening that reveals said counter electrode (4), and
- entirely covering the working electrode that appears in its opening and optionally entirely covering the counter electrode (4) that appears in its opening, with at least one polymer filtration membrane (10), having a selectivity for said dissolved oxido-reducible substance to be measured and defining a diffusion layer for said oxido-reducible substance.

14. Process according to Claim 13, **characterized in that** the polymer membrane (10) is deposited so as to cover the insulating layer (8) and the openings thereof.

15. Amperometric probe for measuring the content of an oxido-reducible substance in a liquid comprising at least one sensor (1) according to any one of Claims 1 to 12.

16. Probe according to Claim 15, **characterized in that** it comprises at least two sensors each comprising a different selective membrane for respectively detecting a dissolved oxido-reducible substance different from that of the other sensor.

17. Probe according to either one of Claims 15 and 16, **characterized in that** it comprises a body (32) containing data processing means and transmission means and a detachable, electrolyte-free, dry head (22) in which the sensor (1) is placed.

18. Probe according to Claim 17, **characterized in that** said detachable measuring head is disposable and contains information for calibrating the probe and a unique numeric identifier of the head.

19. Use of a sensor according to any one of Claims 1 to 12 for measuring the content of an oxido-reducible substance dissolved in a liquid, at a fixed potential.

20. Use of a sensor according to Claim 19, **characterized in that** said oxido-reducible substance is a disinfectant species of said liquid.

21. Use of a sensor according to Claim 20, **characterized in that** said liquid is water and **in that** the disinfectant oxido-reducible substance is selected from the group comprising HOBr, HOCl, ClO₂, Cl₂, chloramines and ozone.
